(19) Europäisches Patentamt
European Patent Office
Office européen des brevets

(11) **EP 4 641 676 A1**

(12) **EUROPEAN PATENT APPLICATION**

(43) Date of publication:
**29.10.2025   Bulletin 2025/44**

(21) Application number: 25168985.7

(22) Date of filing: **07.04.2025**

(51) International Patent Classification (IPC):
*H01M 4/36* (2006.01)     *H01M 4/505* (2010.01)
*H01M 4/58* (2010.01)     *H01M 4/62* (2006.01)
*H01M 10/0525* (2010.01)     *H01M 4/02* (2006.01)

(52) Cooperative Patent Classification (CPC):
**H01M 4/364; H01M 4/505; H01M 4/5825;
H01M 4/62;** H01M 10/0525; H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:   24.04.2024   KR 20240054514

(71) Applicant: SAMSUNG SDI CO., LTD.
**Yongin-si, Gyeonggi-do 17084 (KR)**

(72) Inventors:
• **KIM, Young-Ki**
**17084 Yongin-si (KR)**
• **CHOI, Aram**
**17084 Yongin-si (KR)**
• **KIM, Sangmi**
**17084 Yongin-si (KR)**
• **DOO, Sungwook**
**17084 Yongin-si (KR)**
• **KANG, Gwiwoon**
**17084 Yongin-si (KR)**
• **LEE, Soonrewl**
**17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, POSITIVE ELECTRODE INCLUDING THE SAME AND RECHARGEABLE LITHIUM BATTERY INCLUDING THE SAME**

(57)   A positive electrode active material, a positive electrode including the positive electrode active material, and a rechargeable lithium battery including the positive electrode are provided. The positive electrode active material includes first particles comprising a compound of $Li_{a1}Fe_{x1}B^1_{y1}PO_{4-b1}$ and having an olivine structure, second particles comprising a compound of $Li_{a2}Mn_{x2-}C^1_{y2}O_{4-b2}$ and having a spinel structure and third particles comprising a compound of $Li_{a3}CO_{x3}D^1_{y3}O_{4-b3}$. The first particles and the second particles constitute a main active material, and the content (e.g., amount) of the main active material is about 95 parts by weight to about 99.5 parts by weight on the basis of about 100 parts by weight of the positive electrode active material.

FIG. 6

**Description**

**BACKGROUND**

**1. Field**

One or more embodiments of the present disclosure relate to a positive electrode active material for a rechargeable lithium battery, a positive electrode including the positive electrode active material, and a rechargeable lithium battery including the positive electrode, for example, relate to a positive electrode active material including an olivine-based lithium compound, a positive electrode including the positive electrode active material including the olivine-based lithium compound, and a rechargeable lithium battery including the positive electrode.

**2. Description of the Related Art**

Recently, with the rapid spread and popularization of electronic devices that use batteries (such as mobile phones and/or laptop computers), and/or electric vehicles, the demand for rechargeable batteries with relatively high energy density and high capacity has been rapidly increasing. Accordingly, research and development to improve the performance of such rechargeable batteries, such as rechargeable lithium batteries, is being actively and intensively conducted.

A rechargeable lithium battery is a battery including a positive electrode and a negative electrode, each of which contains an active materials capable of intercalation and deintercalation of lithium ions, and an electrolyte. Electrical energy is generated through oxidation and reduction reactions when lithium ions are intercalated into and deintercalated from the positive electrode and negative electrode. For example, the electrical energy is generated when lithium ions are intercalated into the positive electrode and/or deintercalated from the negative electrode during the discharge process.

**SUMMARY**

One or more aspects of embodiments of the present disclosure are directed toward a positive electrode active material that is economical and has high energy density and enhanced (excellent or suitable) lifetime characteristics.

One or more aspects of embodiments of the present disclosure are directed toward a rechargeable lithium battery that is economical and has high energy density and enhanced (excellent or suitable) lifetime characteristics by including the positive electrode active material.

Additional aspects will be set forth in part in the description which follows and, in part, will be apparent from the description, or may be learned by practice of the presented embodiments of the disclosure.

According to one or more embodiments of the present disclosure, a positive electrode active material includes first particles including a compound of Chemical Formula 1 and having an olivine structure, second particles including a compound of Chemical Formula 2 and having a spinel structure, and third particles including a compound of Chemical Formula 3. The first particles and the second particles constitutes a main active material. A content (e.g., amount) of the main active material is about 95 parts by weight to about 99.5 parts by weight on the basis of about 100 parts by weight of the positive electrode active material, and a content (e.g., amount) of the third particles is about 0.5 parts by weight to about 5 parts by weight on the basis of about 100 parts by weight of the positive electrode active material.

**Chemical Formula 1**  $\qquad$  $Li_{a1}Fe_{x1}B^1_{y1}PO_{4-b1}$

In Chemical Formula 1, $0.8 \leq a1 \leq 1.2$, $0.9 < x1 < 1.0$, $0.001 \leq y1 \leq 0.05$, $0 \leq b1 \leq 0.05$, and $B^1$ is at least one element selected from the group consisting of Al, Ti, V, and Mg.

**Chemical Formula 2**  $\qquad$  $Li_{a2}Mn_{y2}C^1_{y2}O_{4-p2}$

In Chemical Formula 2, $0.8 \leq a2 \leq 1.2$, $1.9 \leq x2 \leq 2.05$, $0 \leq y2 \leq 0.05$, $0 \leq b2 \leq 0.05$, and $C^1$ is at least one element selected from the group consisting of Al and Mg.

**Chemical Formula 3**  $\qquad$  $Li_{a3}CO_{x3}D^1_{y3}O_{4-b3}$

In Chemical Formula 3, $5.9 < a3 \leq 6.1$, $0.9 \leq x3 \leq 1.05$, $0 \leq y3 \leq 0.05$, $0 \leq b3 \leq 0.05$, and $D^1$ is at least one element selected from the group consisting of Al and Mg.

According to one or more embodiments of the present disclosure, a positive electrode for a rechargeable lithium battery may include a positive electrode current collector, and a positive electrode active material layer on the positive electrode current collector. The positive electrode active material layer may include the positive electrode active material, a conductive material, and a binder.

According to one or more embodiments of the present disclosure, a rechargeable lithium battery includes the positive electrode active material.

At least some of the above and other features of the present invention are set out in the claims.

## BRIEF DESCRIPTION OF DRAWINGS

The accompanying drawings are included to provide a further understanding of the present disclosure, and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.

FIG. 1 illustrates a simplified conceptual diagram showing a rechargeable lithium battery according to one or more embodiments of the present disclosure.

FIGS. 2 - 5 are each a schematic view showing a rechargeable lithium battery according to one or more embodiments of the present disclosure, where FIG. 2 illustrates a cylindrical battery, FIG. 3 illustrates a prismatic battery, and FIGS. 4 and 5 each illustrate a pouch-type (kind) battery.

FIGS. 6 and 7 each illustrate an enlarged view showing a positive electrode active material layer of a rechargeable lithium battery according to one or more embodiments of the present disclosure.

FIG. 8A illustrates scanning electron microscope (SEM) images showing a positive electrode active material of Preparation Example 1-1 of the present disclosure.

FIG. 8B illustrates scanning electron microscope (SEM) images showing a positive electrode active material of Preparation Example 1-2 of the present disclosure.

FIG. 9 illustrates scanning electron microscope (SEM) images showing a positive electrode active material of Preparation Example 1-3 of the present disclosure.

FIG. 10 illustrates scanning electron microscope (SEM) images showing a positive electrode active material of Preparation Example 1-4 of the present disclosure.

## DETAILED DESCRIPTION

In order to sufficiently understand the configurations and effects of the present disclosure, one or more embodiments of the present disclosure will be described with reference to the accompanying drawings. It should be noted, however, that the present disclosure is not limited to the following example embodiments, and may be implemented in one or more suitable forms. Rather, the example embodiments are provided only to illustrate the present disclosure and let those skilled in the art fully know the scope of the disclosure.

In this disclosure, it will be understood that, if (e.g., when) an element is referred to as being on another element, the element may be directly on the other element or one or more intervening elements may be present therebetween. In contrast, if (e.g., when) an element is referred to as being "directly on" another element, there are no intervening elements present. In the drawings, thicknesses of some components may be exaggerated for effectively explaining the technical contents. Like reference numerals refer to like elements throughout the present disclosure, and duplicative descriptions thereof may not be provided for conciseness.

Unless otherwise specially noted in this disclosure, the singular forms "a," "an," and "the" are intended to include the plural forms as well, unless the context clearly indicates otherwise. Further, the utilization of "may" when describing embodiments of the present disclosure refers to "one or more embodiments of the present disclosure". In addition, unless otherwise specially noted, the phrase "A or B" or "A and/or B" or "A/B" may indicate "A but not B," "B but not A," and "A and B." The terms "comprise(s)/include(s)/have(has)" and/or "comprising/including/having" used in this disclosure do not exclude the presence or addition of one or more other components.

As used herein, the term "combination thereof" may refer to a mixture, a stack, a composite, a copolymer, an alloy, a blend, or a reaction product of the constituents.

Unless otherwise especially defined in this description, a particle diameter/size may be an average particle diameter/size. In addition, a particle diameter/size indicates an average particle diameter/size (D50) where a cumulative volume is about 50 volume% in a particle size distribution. In other words, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. Further, D90 refers to the average diameter (or size) of particles whose cumulative volume corresponds to 90 vol% in the particle size distribution (e.g., cumulative distribution), and refers to the value of the particle size corresponding to 90% from the smallest particle when the total number of particles is 100% in the distribution curve accumulated in the order of the smallest particle size to the largest particle size. D10 refers to the average diameter (or size) of particles whose cumulative volume corresponds to 10 vol% in the particle size distribution (e.g., cumulative distribution), and refers to the value of the particle size corresponding to 10% from the smallest particle when the total number of particles is 100% in the distribution curve accumulated in the order of the smallest particle size to the largest particle size. The average particle diameter/size (D50) may be measured by a method widely suitable (known) to those skilled in the art, for example, by a particle size analyzer, for example, HORIBA, LA-950 laser particle size analyzer, a transmission electron microscope (TEM), or a scanning electron microscope (SEM). In one or more embodiments, a dynamic light-scattering measurement device may be used to perform a data analysis, the number of particles is counted for each particle size range, and then from the collected data, the average particle diameter/size (D50) value may be obtained through a calculation. In one or more embodiments, a laser scattering method may be utilized to measure the average particle diameter/size (D50). In the laser scattering method, target particles are distributed in a distribution solvent, introduced into a laser scattering particle-diameter measurement device (e.g., MT3000 commercially available from Microtrac, Inc), irradiated with ultrasonic waves of 28 kHz at a power of 60 W, and then an average particle diameter/size (D50) is calculated in the 50% standard of particle diameter distribution in the measurement device. In the present disclosure, when particles are spherical, "diameter/size" indicates an average particle diameter of particles, and when the particles are non-spherical, the "diameter/size" indicates an average major axis length of particles.

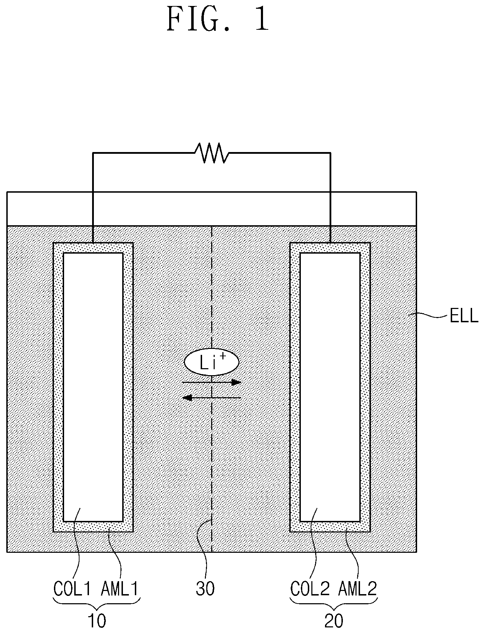

FIG. 1 is a cross-sectional view of a rechargeable lithium battery according to one or more embodiments of the present disclosure. Referring to FIG. 1, a rechargeable lithium battery may include a positive electrode 10, a negative electrode 20, a separator 30, and an electrolyte (e.g., an electrolyte solution) ELL.

The positive electrode 10 and the negative electrode 20 may be spaced and/or apart (e.g., spaced apart or separated) from each other by the separator 30. The separator 30 may be arranged between the positive electrode 10 and the negative electrode 20. The positive electrode 10, the negative electrode 20, and the separator 30 may be in contact with the electrolyte solution ELL. For example, the positive electrode 10, the negative electrode 20, and the separator 30 may be immersed in (e.g., impregnated with) the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

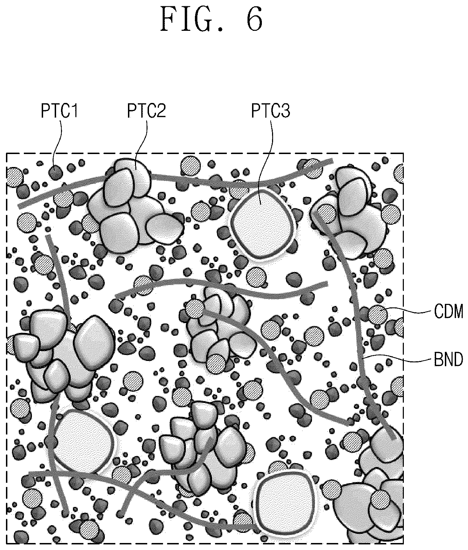

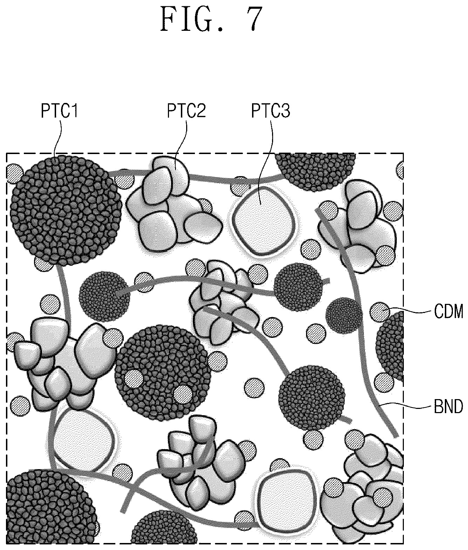

The positive electrode 10 for a rechargeable lithium battery may include a current collector COL1 and a positive electrode active material layer AML1 formed on the current collector COL1. The positive electrode active material layer AML1 may include a positive electrode active material (e.g., in a form of particles) and may further include a binder and/or a conductive material. The positive electrode active material layer AML1 according to one or more embodiments of the present disclosure will be described in more detail with reference to FIGS. 6 and 7. In one or more embodiments, aluminium (Al) may be used for the current collector COL1, but embodiments of the present disclosure are not limited thereto.

## Negative Electrode 20

The negative electrode 20 for a rechargeable lithium battery may include a current collector COL2 and a negative electrode active material layer AML2 on the current collector COL2. The negative electrode active material layer AML2 may include a negative electrode active material (e.g., in a form of particles), and may further include a binder and/or a conductive material (e.g., an electrically conductive material).

For example, in one or more embodiments, the negative electrode active material layer AML2 may include about 90 wt% to about 99 wt% of the negative electrode active material, about 0.5 wt% to about 5 wt% of the binder, and about 0 wt% to about 5 wt% of the conductive material, based on 100 wt% of a total weight of the negative electrode active material layer.

The binder may serve to attach the negative electrode active material particles well to each other and also to attach the negative electrode active material well to the current collector COL2. The binder may include a non-aqueous (e.g., water-insoluble) binder, an aqueous (water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and/or a (e.g., any suitable) combination thereof.

When an aqueous binder is used as the binder of the negative electrode, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include sodium (Na), potassium (K), or lithium (Li).

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons may be used in the battery. Non-limiting examples thereof may include a carbon-based material such as natural graphite, artificial graphite, carbon black, acetylene black, Ketjen black, a carbon fiber, a carbon nanofiber, and a carbon nanotube; a metal-based material including copper, nickel, aluminium, silver, and/or the like, in a form of a metal powder or a metal fiber; a conductive polymer such as a polyphenylene derivative; and/or a (e.g., any suitable) mixture thereof.

The current collector COL2 may include a copper foil, a nickel foil, a stainless steel foil, a titanium foil, a nickel foam, a copper foam, a polymer substrate coated with a conductive metal, and/or a (e.g., any suitable) combination thereof.

**Negative Electrode Active Material**

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon, and/or a (e.g., any suitable) combination thereof. The crystalline carbon may be graphite such as non-shaped (e.g., irregularly shaped), sheet-shaped, flake-shaped, sphere-shaped, or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material or a Sn-based negative electrode active material. The Si-based negative electrode active material may include silicon, a silicon-carbon composite, $SiO_x$ $(0 < x \leq 2)$, a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof), and/or a (e.g., any suitable) combination thereof. The Sn-based negative electrode active material may include Sn, $SnO_k$ $(0<k\leq2)$ (e.g., $SnO_2$), a Sn-based alloy, and/or a (e.g., any suitable) combination thereof.

The silicon-carbon composite (e.g., in a form of particles) may be a composite of silicon and amorphous carbon. According to one or more embodiments, the silicon-carbon composite may be in a form of silicon particles and amorphous carbon coated on the surface of each of the silicon particles. For example, in one or more embodiments, the silicon-carbon composite may include a secondary particle (core) in which primary silicon particles are assembled (agglomerated), and an amorphous carbon coating layer (shell) on the surface of the secondary particle. The amorphous carbon may also be between the primary silicon particles, and, for example, the primary silicon particles may each be coated with the amorphous carbon. The secondary particle may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on a surface of the core.

In one or more embodiments, the Si-based negative electrode active material and/or the Sn-based negative electrode active material may be used in combination with a carbon-based negative electrode active material.

**Separator 30**

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, for example, a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one surface or both surfaces (e.g., two opposite surfaces) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but embodiments of the present disclosure are not limited thereto.

In one or more embodiments, the organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in an electrochemical reaction of the battery.

The non-aqueous organic solvent may be a carbonate-based solvent, an ester-based solvent, an ether-based solvent, a ketone-based solvent, an alcohol-based solvent, an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond), and/or the like; amides such as dimethylformamide; dioxolanes such as 1,3-dioxolane, 1,4-dioxolane, and/or the like; sulfolanes; and/or the like.

The non-aqueous organic solvents may be used alone or in combination of two or more.

In addition, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in a rechargeable lithium battery, enables a basic operation of the rechargeable lithium battery, and improves transportation and migration of the lithium ions between the positive electrode and the negative electrodes. The lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_3)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

**Rechargeable Lithium Battery**

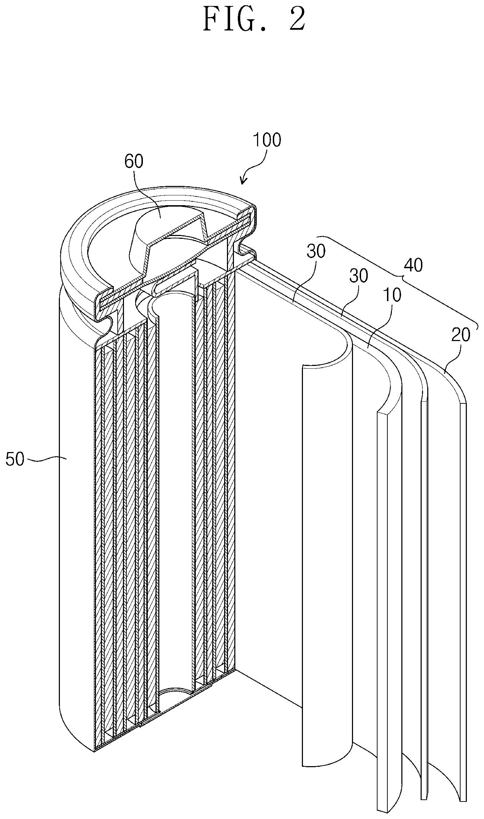

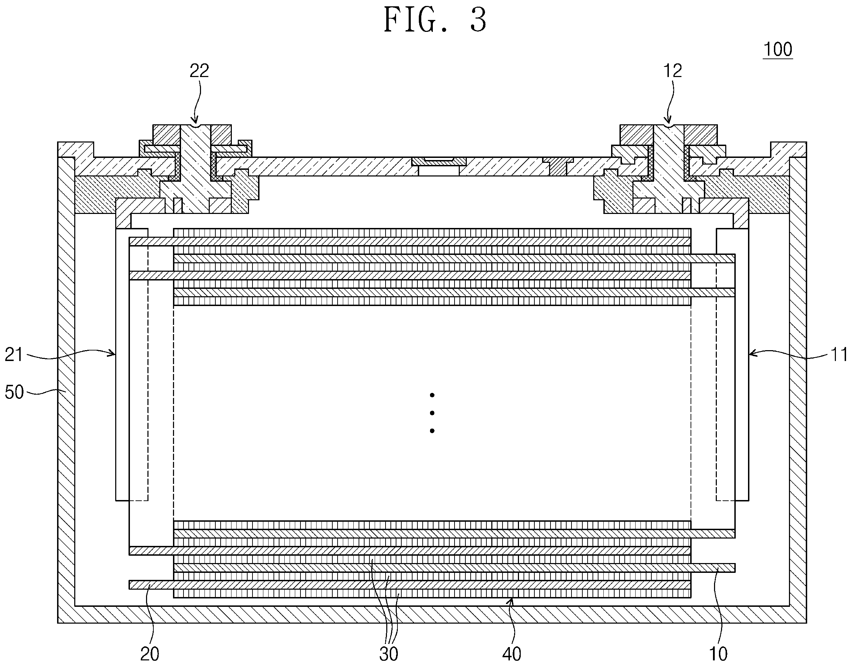

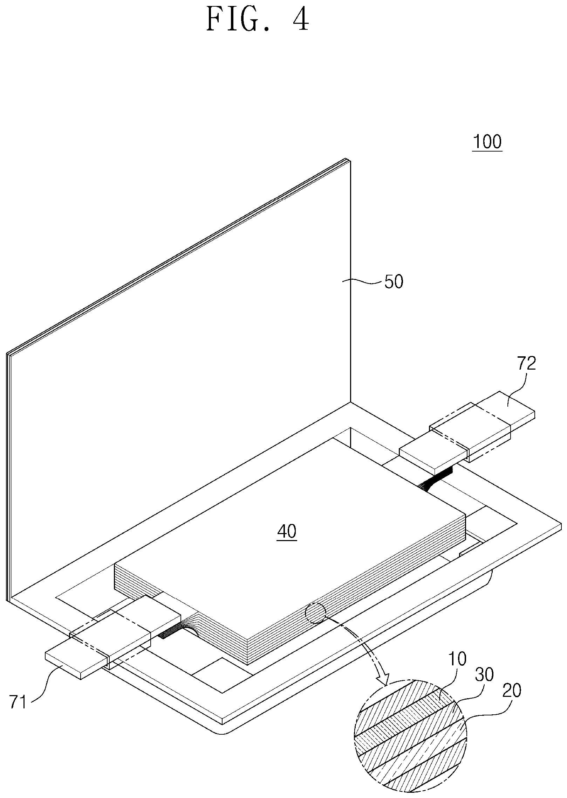

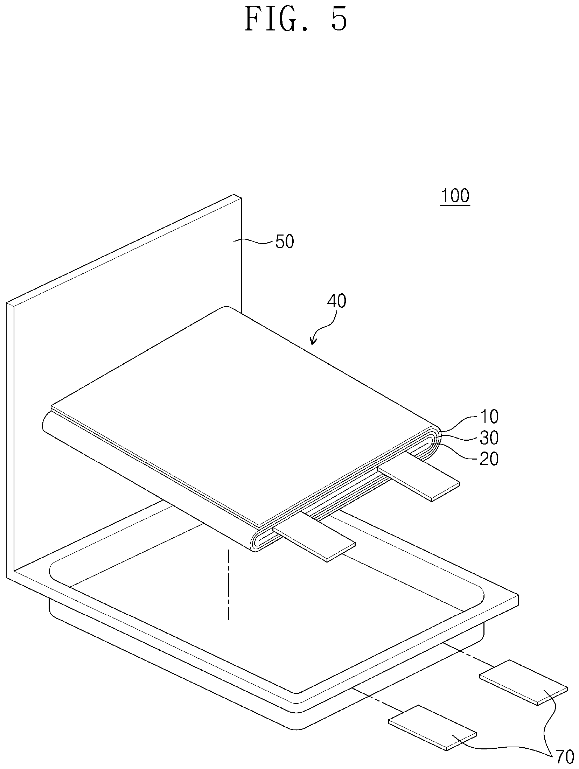

The rechargeable lithium battery may be classified into cylindrical, prismatic, pouch, or coin-type (kind) batteries, and/or the like depending on their shape. FIGS. 2 to 5 are each a schematic view illustrating a rechargeable lithium battery according to one or more embodiments of the present disclosure. FIG. 2 shows a cylindrical battery, FIG. 3 shows a prismatic battery, and FIGS. 4 and 5 each show a pouch-type (kind) battery. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. In some embodiments, the rechargeable lithium battery 100 may include a sealing member 60 sealing the case 50, as shown in FIG. 2. In some embodiments, as shown in FIG. 3, the rechargeable lithium battery 100 may include a positive lead tab 11, a positive terminal 12, a negative lead tab 21, and a negative terminal 22. In some embodiments, as shown in FIGS. 4 and 5, the rechargeable lithium battery 100 may include an electrode tab 70, which may be, for example, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIGS. 6 and 7 each illustrate an enlarged view of a positive electrode active material layer of a rechargeable lithium battery according to one or more embodiments of the present disclosure. Referring to FIGS. 6 and 7, as discussed above, the positive electrode active material layer AML1 (see FIG. 1) may include a first particle PTC1, a second particle PTC2, a third particle PTC3, a conductive material CDM (e.g., electron conductor), and a binder BND. A plurality of the first particles PTC1, a plurality of the second particles PTC2, and a plurality of the third particles PTC3 constitute a positive electrode active material according to one or more embodiments of the present disclosure.

In one or more embodiments, the positive electrode active material layer AML1 may further include an additive that may be served as a sacrificial positive electrode.

In one or more embodiments, a content (e.g., amount) of the positive electrode active material (PTC1, PTC2, and PTC3) in the positive electrode active material layer AML1 may be about 90 wt% to about 99.5 wt% relative to 100 wt% of a total weight of the positive electrode active material layer AML1. Each of the contents of the binder BND and the conductive material (e.g., electron conductor) CDM may be about 0.5 wt% to about 5 wt% relative to 100 wt% of the total weight of the positive electrode active material layer AML1.

The binder BND may combine the first particles PTC1, the second particles PTC2, the third particles PTC3, and the conductive material CDM with each other. For example, the binder BND may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material CDM may be used to improve the conductivity (e.g., electrical conductivity) of the positive electrode active material layer AML1. Any conductive material that does not cause a chemical change of the positive electrode active material layer AML1 may be used without limitation as the conductive material CDM. For example, the conductive material CDM may include: a carbon-based material such as natural graphite, artificial graphite, carbon black, acetylene black, Ketjen black, a carbon fiber, a carbon nano-fiber, and carbon nano-tubes; a metal-based material containing copper, nickel, aluminium, silver, and/or the like and having a metal powder or metal fiber form (e.g., in a form of metal powder or metal fibers); a conductive polymer such as a polyphenylene derivative; and/or a (e.g., any suitable) mixture thereof.

Hereinafter, each of the first particle PTC1, the second particle PTC2, and the third particle PTC3 will be explained in more detail.

**First Particle PTC1**

The first particle PTC1 includes a lithium compound with an olivine structure, represented by Chemical Formula 1.

**Chemical Formula 1** $\quad\quad\quad\quad\quad\quad$ $Li_{a1}Fe_{x1}B^1_{y1}PO_{4-b1}$

In Chemical Formula 1, $0.8 \leq a1 \leq 1.2$, $0.95 \leq x1 \leq 1.0$ (or $0.9 \leq x1 \leq 1.0$), $0 \leq y1 \leq 0.05$ (e.g. $0.001 \leq y1 \leq 0.05$), $0 \leq b1 \leq 0.05$, $x1 + y1 = 1$, and $B^1$ includes (e.g., be) at least one element selected from the group consisting of Al, Ti, V, and Mg. $B^1$ may be a dopant doped in the first particle PTC1.

The dopant may have the effect of controlling first primary particles of the first particle PTC1 to grow uniformly (e.g., substantially uniformly), thereby improving the charge and discharge efficiency, low-temperature properties, and lifetime characteristics of the rechargeable lithium battery.

The first particle PTC1 has advantages of high economic feasibility, high structural stability, and excellent or suitable lifetime characteristics. Because Fe is contained as a main component in the first particle PTC1, the first particle PTC1 is relatively inexpensive, and because the first particle PTC1 is structurally stable, chemical changes thereof may be relatively little even though subjected to repeated charging and discharging.

In one or more embodiments, the first particle PTC1 may include a coating layer (e.g., first coating layer) on the surface thereof. The coating layer may cover the entire surface (e.g., entire outermost surface) of the first particle PTC1 or may cover a portion of the surface of the first particle PTC1. For example, the coating layer may include carbon and/or a carbon-containing compound. The first particle PTC1 may have improved structural stability and electrical conductivity due to the coating layer.

In one or more embodiments, the coating layer may further include at least one (e.g., at least one metal-containing compound) selected from the group consisting of an aluminium-containing compound, a titanium-containing compound, a magnesium-containing compound, and a vanadium-containing compound. The metal-containing compound such as the aluminium-containing compound, the titanium-containing compound, the magnesium-containing compound, and the vanadium-containing compound may be, for example, a metal oxide, a metal hydroxide, a metal carbonate, a synthesized compound thereof, and/or a (e.g., any suitable) mixture thereof. The metal-containing compound may further include other metal or non-metal elements. For example, in one or more embodiments, the metal-containing compound may further include lithium.

In one or more embodiments, the first particle PTC1 may further include carbon derived from the coating layer. A carbon content (e.g., amount) in the first particle PTC1 may be about 0.5 wt% to about 10 wt%, about 1 wt% to about 3 wt%, or about 1.5 wt% to about 2.5 wt%, based on based on 100 wt% of a total weight of the first particle PTC1.

The first particles PTC1 may each have a single particle form (e.g., in a form of single particle or monolithic particle) and/or a secondary particle form (e.g., in a form of secondary particle). For example, the first particles PTC1 may be present only in a single particle form, only in a secondary particle form, or in a form in which single particles and secondary particles are mixed. Hereinafter, the first particle PTC1 of a single particle form (e.g., in a form of single particle or monolithic particle) will be explained referring to FIG. 6, and the first particle PTC1 of a secondary particle form (e.g., in a form of secondary particle) will be explained referring to FIG. 7.

In one or more embodiments, referring to FIG. 6, the first particle PTC1 may have a single particle form (e.g., in a form of single particle or monolithic particle). In the disclosure, the single particle may refer to a sole particle that does not have a grain boundary inside. The single particle has a morphology phase, and may refer to a single particle, a monolith structure, a monolithic structure, or a non-agglomerated particle, in which the particles exist as an independent phase that are not agglomerated. For example, in one or more embodiments, the single particle may be a single crystal. In one or more embodiments, the single particle may be a particle containing several crystals. In one or more embodiments, the single particle may be a solely separated form. In one or more embodiments, the single particle may be in the form of 2 to 100 single particles attached to each other.

If (e.g., when) the first particle PTC1 is a single particle, the first particle PTC1 may include at least one first primary particle. In one or more embodiments, the first particle PTC1 may have a spherical shape or an elliptical shape, in which the first primary particles may be attached. In one or more embodiments, though the first primary particles are attached, the first particle PTC1 may not have a spherical shape but may have a random shape.

If (e.g., when) the first particles PTC1 are single particles, the first particles PTC1 may be provided in one or more suitable sizes. For example, in one or more embodiments, an average particle diameter of the first particles PTC1 may be about 0.5 micrometers ($\mu$m) to about 2.5 $\mu$m, or about 1 $\mu$m. A minimum particle diameter of the first particles PTC1, that is, the size of the first primary particles, may be about 100 nanometers (nm) to about 500 nm or about 200 nm to about 300 nm.

In one or more embodiments, the average particle diameter may be measured by a particle size analyzer. The average particle diameter may refer to the diameter of particles (D50) at an accumulated volume of about 50 vol% in a particle size distribution.

In one or more embodiments, the minimum particle diameter, that is, the size of the first primary particles, may refer to an average diameter measured by randomly selecting about 30 primary particles in an electron microscope image on the first particles PTC1.

If (e.g., when) the first particles PTC1 are single particles, a porosity of the first particles PTC1 may be less than about 30%. Here, porosity (n) may be defined as the pore volume (Vp) divided by the total volume (Vt) of particles, or

$$n = \frac{V_p}{V_t}.$$

Porosity (n) may be measured by Mercury Intrusion Porosimetry (MIP), gas adsorption methods such as BET analysis, or a combination of helium pycnometry and bulk density measurement.

A span value of the first particles PTC1, analyzed by a particle size analyzer, may not deviate from a range from about 0.3 to about 0.75. In particle size analysis, the span value is a value that indicates the width of the particle size distribution, or

$$\text{Span} = \frac{D_{90} - D_{10}}{D_{50}}$$

A lower span value indicates a more uniform particle size distribution, meaning the particles are more consistent in size. Conversely, a higher span value suggests a wider range of particle sizes within the sample.

In one or more embodiments, referring to FIG. 7 again, the first particles PTC1 may have a secondary particle form (e.g., in a form of secondary particle). The secondary particle may have a polycrystal form and refers to a form in which at least two or more first primary particles are agglomerated. For example, one first particle PTC1 may include a plurality of first primary particles that are agglomerated with each other. The first particles PTC1 may have a spherical shape or an elliptical shape.

In one or more embodiments, if (e.g., when) the first particle PTC1 has a secondary particle form (i.e., in a form of secondary particle), the first particle PTC1 may further include a grain boundary coating layer on the surface of each of the first primary particles. The grain boundary coating layer may be present in the first particle PTC1. The grain boundary coating layer may be formed along the interface between the first primary particles inside the first particle PTC1. For example, the grain boundary coating layer may refer to a material coated on a grain boundary in the first particle PTC1. The grain boundary coating layer may include carbon and/or a carbon-containing compound. The grain boundary coating layer may further include at least one selected from the group consisting of an aluminium-containing compound, a titanium-containing compound, a magnesium-containing compound, and a vanadium-containing compound.

If (e.g., when) the first particle PTC1 is a secondary particle, an interior of the above-described first particle PTC1 may refer to the entire interior of the first particle PTC1 excluding the surface (e.g., outermost surface) of the first particle PTC1. For example, the interior of the first particle PTC1 may refer to an entire interior from a depth of about 10 nm from the surface (e.g., outermost surface) of the first particle PTC1 to a center of the first particle PTC1, or a region from a depth of about 10 nm from the surface of the first particle PTC1 to a depth of about 2 $\mu$m from the surface of the first particle PTC1.

If (e.g., when) the first particle PTC1 is a secondary particle, because the first particle PTC1 may further include the grain boundary coating part (i.e., the grain boundary coating layer), the structural stability thereof may be reinforced, and a substantially uniform coating layer may be formed on the surface of the first particle PTC1. In other words, the grain boundary coating part/layer may facilitate the formation of a substantially uniform coating layer on the surface of the first particle PTC1. In addition, because the first particle PTC1 may further include the grain boundary coating part/layer, the electrical conductivity of the first particle PTC1 may be further improved.

If (e.g., when) the first particle PTC1 is a secondary particle, the first particle PTC1 may further include carbon derived from the coating layer and/or grain boundary coating layer. A carbon element content (e.g., amount) in the first particle PTC1 may be about 0.5 wt% to about 10 wt%, about 1 wt% to about 3 wt%, or about 1.5 wt% to about 2.5 wt%, based on 100 wt% of a total weight of the first particle PTC1. If (e.g., when) the first particle PTC1 is a secondary particle, the carbon content (e.g., amount) may be greater than embodiments in which the first particle PTC1 is a single particle.

If (e.g., when) the first particles PTC1 are each a secondary particle, an average particle diameter of the first particles PTC1 may be about 2 $\mu$m to about 15 $\mu$m, about 3 $\mu$m to about 10 $\mu$m, or about 3 $\mu$m to about 7 $\mu$m. For example, in one or more embodiments, the average particle diameter of the first particles PTC1 may be about 5 $\mu$m. In one or more embodiments, the average particle diameter may be measured using a particle size analyzer. The average particle diameter may refer to the diameter (D50) of particles at an accumulated volume of about 50 vol% in a particle size distribution.

If (e.g., when) the first particle PTC1 is a secondary particle, an average size of the first primary particles may be less than about 200 nm. For example, in one or more embodiments, the average size of the first primary particles may be about 10 nm to about 200 nm, about 20 nm to about 200 nm, about 50 nm to about 200 nm, or about 100 nm to about 200 nm. In one or more embodiments, the average particle size of the first primary particles may refer to an average diameter measured by randomly selecting about 30 primary particles in an electron microscope image on the positive electrode active material. The size of the first primary particles may be substantially uniform.

If (e.g., when) the first particles PTC1 each have a secondary particle form, the size of the first primary particles may be smaller compared to embodiments in which the first particles PTC1 are each a single particle. For example, the size of the first primary particles in the embodiments in which the first particles PTC1 each have a secondary particle form may be smaller by about 100 nm than the size of the first primary particles in the embodiments in which the first particles PTC1 each have a single crystal form.

If (e.g., when) the first particles PTC1 are each a secondary particle, the average particle diameter of the first particles PTC1 and the average size of the first primary particles satisfy the above-described ranges, and if (e.g., when) the size of the first primary particles is substantially uniform, the charge and discharge capacity and the capacity at low temperature of a rechargeable lithium battery including the first particles PTC1 may be improved.

If (e.g., when) the first particles PTC1 are each secondary particle, the porosity of the first particles PTC1 may be about 20% to about 40%. The span value of the first particles PTC1 analyzed by a particle size analyzer may be about 0.3 to about 0.75.

If (e.g., when) the first particles PTC1 are each a secondary particle, the positive electrode active material layer AML1 (see FIG. 1) may be smoothly attached to the current collector COL1 (see FIG. 1) with a relatively small amount of a binder BND. For example, the content (e.g., amount) of the binder BND may be about 0.5 wt% to about 3 wt% on the basis of 100 wt% of the total weight of the positive electrode active material layer AML1. This may be due to an increase in the interaction between the first particles PTC1 and the current collector COL1 (see FIG. 1), because the average particle diameter of the first particles PTC1 is large. If (e.g., when) the content (e.g., amount) of the binder BND contained in the positive electrode active material layer AML1 is reduced, the content (e.g., amount) of the positive electrode active material may be increased accordingly, thereby achieving the effect of improving the capacity and energy density of a battery. In addition, by reducing the content (e.g., amount) of the binder, thereby reducing resistance, the effect of improving the electrical conductivity of the positive electrode may be achieved.

In the context of the present disclosure and unless otherwise defined, the first particle PTC1 can exist in two forms: single particles and secondary particles. Single particles are individual, non-agglomerated particles that may be single crystals or contain several crystals. These particles have a uniform structure without internal grain boundaries, contributing to their high structural stability and minimal chemical changes during repeated charging and discharging. Single particles typically have a smaller average particle diameter, ranging from about 0.5 micrometers to about 2.5 micrometers, and are provided in various sizes, enhancing the charge and discharge efficiency, low-temperature properties, and lifetime characteristics of the rechargeable lithium battery. On the other hand, secondary particles are agglomerations of multiple first primary particles, forming a polycrystal structure. These secondary particles may include a grain boundary coating layer, which improves structural stability and electrical conductivity. The average particle diameter of secondary particles is larger, ranging from about 2 micrometers to about 15 micrometers, and they may have a higher carbon content derived from the coating layer. The secondary particle form allows for a smoother attachment to the current collector with less binder, increasing the active material content and improving the battery's capacity and energy density. The porosity and particle size distribution of secondary particles also contribute to enhanced battery performance.

## Second Particle PTC2

The second particle PTC2 includes a lithium compound with a spinel structure, represented by Chemical Formula 2.

$$\text{Chemical Formula 2} \qquad \text{Li}_{a2}\text{Mn}_{x2}\text{C}^1_{y2}\text{O}_{4-b2}$$

In Chemical Formula 2, $0.8 \leq a2 \leq 1.2$, $1.9 \leq x2 \leq 2.05$, $0 \leq y2 \leq 0.05$ (e.g. $0.001 \leq y2 \leq 0.05$), $0 \leq b2 \leq 0.05$, and $C^1$ includes (e.g., be) at least one element selected from the group consisting of Al and Mg. $C^1$ may be a dopant doped in the second particle PTC2. In one or more embodiments, in Chemical Formula 2, $0.8 < a2 \leq 1.2$, $1.95 \leq x2 \leq 2.05$, $0 \leq y2 \leq 0.05$, $0 \leq b2 \leq 0.05$, $2 \leq x2+y2 \leq 2.1$ may be satisfied. In one or more embodiments, in Chemical Formula 2, $0.8 < a2 \leq 1.2$, $1.95 \leq x2 \leq 2$, $0 \leq y2 \leq 0.05$, $0 \leq b2 \leq 0.05$, $x2+y2=2$ may be satisfied.

The dopant may have the effect of controlling second primary particles of the second particle PTC2 to grow uniformly (e.g., substantially uniformly), thereby improving the charge and discharge efficiency, low-temperature properties, and lifetime characteristics of the rechargeable lithium battery.

The second particle (PTC2) has the advantages of high output properties, high average voltage, and excellent or suitable structural stability. The second particle PTC2 may have a spinel structure composed of the lattice structure of tetrahedral and octahedral. Because the lattice structure has one or more suitable passages, lithium ions may be smoothly intercalated/deintercalated, resulting in excellent or suitable output properties. The lattice structure may be more stable due to Mn in the second particle PTC2. Due to the structural stability, electrochemical properties of the particles may be maintained even at a high voltage, allowing the operation at a high voltage.

The second particle PTC2 is a lithium manganese oxide and may be a positive electrode active material in which cobalt is substituted with manganese in a lithium cobalt oxide. In one or more embodiments of the present disclosure, a cobalt (Co) content (e.g., amount) of the second particle PTC2 may be very small that is substantially the same as being omitted or absent. For example, in one or more embodiments, the cobalt (Co) content (e.g., amount) of the second particle PTC2 may be about 100 ppm or less. Cobalt (Co) is substantially omitted in the positive electrode active material according to Chemical Formula 2 of the present disclosure, and the rechargeable lithium battery that is economical and has high capacity and operating voltage, may be provided.

Referring to FIGS. 6 and 7 again, in one or more embodiments, the second particle PTC2 may have a polycrystal form and may include a secondary particle in which at least two or more second primary particles are agglomerated. For example, one second particle PTC2 may include a plurality of second primary particles that are agglomerated with each other. In one or more embodiments, the second particle PTC2 may have an agglomerated spherical shape of the second primary particles, and though the second primary particles agglomerate, in some embodiments, the second particle PTC2 may have a random shape.

An average particle diameter of the second particles PTC2 may be about 3 $\mu$m to about 20 $\mu$m, about 4 $\mu$m to about 15 $\mu$m, or about 5 $\mu$m to about 10 $\mu$m. For example, in one or more embodiments, the average particle diameter of the second particles PTC2 may be about 8 $\mu$m. In one or more embodiments, the average particle diameter may be measured by a particle size analyzer. The average particle diameter may refer to the diameter (D50) of particles at an accumulated volume of about 50 vol% in a particle size distribution.

An average size of the second primary particles constituting the second particles PTC2 may be about 3 $\mu$m or less. For example, in one or more embodiments, the particle size of the second primary particles may be about 300 nm to about 3 $\mu$m, about 0.5 $\mu$m to about 3 $\mu$m, about 1 $\mu$m to about 3 $\mu$m, or about 2 $\mu$m to about 3 $\mu$m. In one or more embodiments, the average size of the second primary particles may refer to an average diameter/size measured by randomly selecting about 30 primary particles in an electron microscope image on the positive electrode active material. The size of the second primary particles may be substantially uniform. The average size of the second primary particles may be greater than the average size of the first primary particles. A difference between the average size of the second primary particles and the average size of the first primary particles may be about 300 nm or more.

In one or more embodiments, the second particle PTC2 may include a second coating layer on the surface thereof. By including the second coating layer, the structural collapse of the second particle PTC2 due to repeated charging and discharging may be effectively suppressed or reduced.

The second coating layer may include a metal-containing compound selected from among an aluminium-containing compound, a magnesium-containing compound, and/or a (e.g., any suitable) combination thereof. The metal-containing compound in the second coating layer may be, for example, a metal oxide, a metal hydroxide, a metal carbonate, a synthesized compound thereof, and/or a (e.g., any suitable) mixture thereof. The metal-containing compound may further include other metal or nonmetal elements. For example, in one or more embodiments, the second coating layer may further include lithium, manganese, and/or nickel.

In one or more embodiments, a method for measuring the metal content (e.g., amount) in the second coating layer of the second particle PTC2 may include performing scanning electron microscopy-energy dispersive X-ray spectroscopy (SEM-EDS) on the second particles PTC2. Through the analysis, the aluminium and/or magnesium contents in the second coating layer may be confirmed. In one or more embodiments, as a method for measuring the metal content (e.g., amount) in the second coating layer, an inductively coupled plasma-mass spectrometry (ICP-MS), an inductively coupled plasma optical emission spectroscopy (ICP-OES), and/or the like may be used in addition to the SEM-EDS.

**Third Particle PTC3**

The third particle PTC3 includes a lithium compound represented by Chemical Formula 3.

**Chemical Formula 3** $\qquad$ $Li_{a3}Co_{x3}D^1_{y3}O_{4-b3}$

In Chemical Formula 3, $5.9 < a3 \leq 6.1$, $0.9 \leq x3 \leq 1.05$, $0 \leq y3 \leq 0.05$, and $0 \leq b3 \leq 0.05$. $D^1$ includes (e.g., be) at least one element selected from the group consisting of Al and Mg. The dopant may improve the surface stability and structural stability of the third particle PTC3.

The third particle PTC3 has advantages of high capacity energy density.

In one or more embodiments, referring to FIG. 6, the third particles PTC3 may have a single particle form (e.g., in a form of single particle or monolithic particle). In the disclosure, the single particle may refer to a sole particle that does not have a grain boundary inside. The single particle has a morphology phase, and may refer to a single particle, a monolith structure, a monolithic structure, or a non-agglomerated particle, in which the particles exist as an independent phase that are not agglomerated. For example, in one or more embodiments, the single particle may be a single crystal. In one or more embodiments, the single particle may be a particle containing several crystals. In one or more embodiments, the single particle may be a solely separated form. In one or more embodiments, the single particle may be in the form of 2 to 100 single particles attached to each other.

If (e.g., when) the third particle PTC3 is a single particle, the third particle PTC3 may include at least one third primary particle. In one or more embodiments, the third particle PTC3 may have a spherical shape or an elliptical shape, in which the third primary particles may be attached. In one or more embodiments, though the third primary particles attached, the third particle PTC3 may not have a spherical shape but may have a random shape.

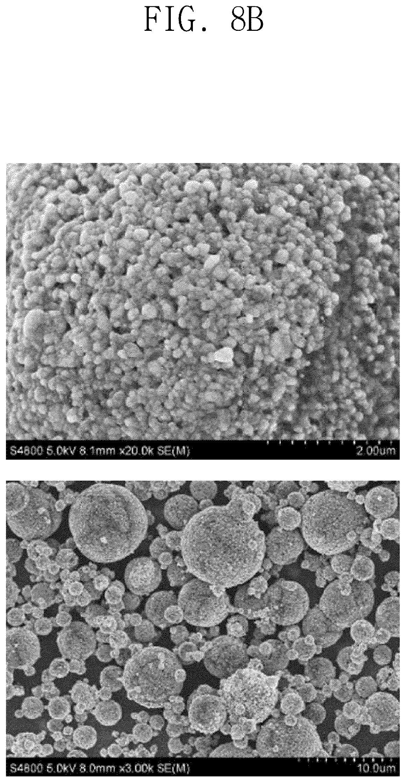

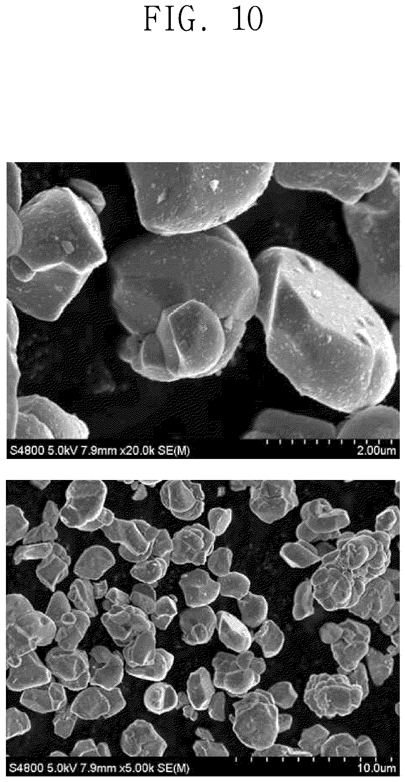

FIGS. 6 and 7 illustrate embodiments in which the third particle PTC3 is in a form including only one particle, but the third particle PTC3 may have a spherical or an elliptical shape, or a random shape, in which two or more third primary particles are attached. For example, in one or more embodiments, the third particle PTC3 may have a random form in which the third primary particles are attached, as shown in FIG. 10. Referring to FIGS. 8B to 10, the attached shape of the third primary particles may be relatively more irregular than the agglomerated shapes of the above-described first primary particles and the second primary particles.

If (e.g., when) the third particles PTC3 are single particles, the third particles PTC3 may be provided in one or more suitable sizes. For example, in one or more embodiments, an average particle diameter of the third particles PTC3 may be about 2 $\mu$m to about 8 $\mu$m. A minimum particle diameter of the third particles PTC3, that is, the size of the third primary particles, may be about 100 nm to about 500 nm. The average particle diameter of the third particles PTC3 may be greater than the average particle diameter of the above-described first particles PTC1. If (e.g., when) the third particle PTC3 includes a plurality of single particles (e.g., a plurality of third primary particles), the average size of the third primary particles of the third particle PTC3 may be greater than the average size of the first primary particles.

In one or more embodiments, the third particle PTC3 may include a third coating layer on the surface thereof. The coating layer may serve the suppressing or reducing effect of the structural collapse of the third particle PTC3 during repeated charging and discharging. Accordingly, the coating layer may improve the lifetime characteristics of the rechargeable lithium battery.

The third coating layer may include a metal-containing compound selected from among an aluminium-containing compound, a magnesium-containing compound, and/or a (e.g., any suitable) combination thereof. The metal-containing compound in the third coating layer may be, for example, a metal oxide, a metal hydroxide, a metal carbonate, a synthesized compound thereof, and/or a (e.g., any suitable) mixture thereof. The metal-containing compound may further include other metal or nonmetal elements. For example, in one or more embodiments, the third coating layer may further include lithium, manganese, and/or nickel.

Li derived from the third particle PTC3 may be used as irreversible Li, which moves to the negative electrode during initial charging but does not return to the positive electrode during discharging. For example, the third particle PTC3 may play the role of a sacrificial positive electrode. In one or more embodiments, the third particle PTC3 may play the role of supplying Li in a formation process, which is the first charge and discharge stage, and may not participate in a subsequent charge and discharge process, for example, the third particles PTC3 may be electrochemically inactive after a first cycle.

The third particles PTC3 may participate in forming a solid electrolyte interface (SEI) film on the surface of the negative electrode in a formation process. Li derived from the third particle PTC3 may be converted to irreversible Li, which then no longer participates in a charge and discharge reaction.

The third particle PTC3 has properties of high capacity and energy density, and an amount of irreversible Li supplied during initial charging and discharging may be sufficient. The third particle PTC3 sacrifices so that Li derived from the main active material, which will be explained later, is not bound to irreversible Li, and the capacity of the main active material, which will be explained later, may be realized as much as an initially designed amount, and ultimately, the increasing effect of the capacity and energy density of the rechargeable lithium battery may be shown. The positive electrode active material according to the present disclosure includes an appropriate or suitable amount of the third particles PTC3, and the capacity and energy density of the rechargeable lithium battery may be increased.

The third particle PTC3 according to one or more embodiments of the present disclosure may include $Li_6CoO_4$. $Li_6CoO_4$ may provide lots of (e.g., suitable amount of) Li atoms in a formation process, and more irreversible Li may be provided. Accordingly, the effect as the sacrificial positive electrode may be obtained to a greater extent. For example, $Li_6CoO_4$ may be decomposed at between about 3.0 V to about 4.0 V to provide six Li atoms. However, $Li_6CoO_4$ is merely an example, and embodiments of the present disclosure are not limited thereto.

If (e.g., when) the content (e.g., amount) of the third particles PTC3 contained in the positive electrode active material is within a specific content (e.g., amount) range, the third particles PTC3 may play the role in compensating for irreversible Li without affecting battery properties targeted when designing the main active material, which will be explained later. The content (e.g., amount) range of the third particles PTC3 will be explained later.

**Main Active Material**

Referring to FIGS. 6 and 7, the main active material according to one or more embodiments of the present disclosure will be explained in more detail hereinafter.

The first particles PTC1 and the second particles PTC2 constitute the main active material (major components). On the basis of about 100 parts by weight of the positive electrode active material, a content (e.g., amount) of the main active material is about 95 parts by weight to about 99.5 parts by weight. For example, on the basis of about 100 parts by weight of the positive electrode active material, a content (e.g., amount) of the main active material may be about 99 parts by weight to about 99.5 parts by weight.

A lithium iron phosphate-based positive electrode active material (first particle PTC1) with an olivine crystal structure may have advantages of being relatively cheap and having a stable structure and excellent or suitable lifetime characteristics compared to other positive electrode active materials. A lithium manganese oxide-based positive electrode active material (second particle, PTC2) with a spinel structure may have advantages of having a high average voltage. Because the first particles PTC1 and the second particles PTC2 are mixed and used as the main active material in the positive electrode active material according to the present disclosure, both advantages of the first particles PTC1 and the second particles PTC2 may be obtained simultaneously. For example, properties of inexpensive and excellent or suitable in lifetime characteristics, and at the same time, being operated at a high operating voltage may be achieved.

A mixing ratio of the first particles PTC1 to the second particles PTC2 may be about 40:60 to about 90:10 or about 46:54 to about 37:63 based on the weight. An Mn content (e.g., amount) relative to transition metals (e.g., total transition metal) excluding lithium in the main active material that is composed of the first particles PTC1 and the second particles PTC2, may be about 40 mol% to about 75 mol% or about 50 mol% to about 70 mol%. The Mn content (e.g., amount) may be similar to the manganese content (e.g., amount) of a general lithium manganese iron phosphate positive electrode active material (hereinafter, referred to as LMFP).

By appropriately or suitably mixing the first particles PTC1 and the second particles PTC2 so as to satisfy the manganese content (e.g., amount) range, the positive electrode active material according to the present disclosure may be easy to manufacture/prepare and process, while exhibiting electrochemically similar properties to the LMFP. Because the LMFP operates at a high average voltage, it may be an alternative to mitigate the defect of a low average voltage of the lithium iron phosphate-based positive electrode active material (hereinafter, referred to as LFP). However, the LMFP may have limitations in that it is difficult to manufacture and process if (e.g., when) applied to actual processes. The positive electrode active material according to the present disclosure may be easily manufactured and processed while exhibiting properties similar to the LMFP by controlling the Mn content (e.g., amount) of the main active material using the second particles PTC2.

**Positive Electrode Active Material**

Referring to FIGS. 6 and 7, the positive electrode active material according to one or more embodiments of the present disclosure will be explained in more detail herein.

The positive electrode active material according to the present disclosure includes the first particles PTC1, the second particles PTC2 and the third particles PTC3.

The above-described first particles PTC1 and second particles PTC2 have shortcomings of having relatively low energy density compared to other positive electrode materials. The positive electrode active material according to the present disclosure may have high capacity and energy density by further including the third particles PTC3 that may function as a sacrificial positive electrode, in addition to the first particles PTC1 and the second particles PTC2.

The content (e.g., amount) of the third particles PTC3 is about 0.5 parts by weight to about 5 parts by weight, for example, about 0.5 parts by weight to about 1 part by weight on the basis of about 100 parts by weight of the positive electrode active material. If (e.g., when) the content (e.g., amount) of the third particles PTC3 satisfies the above range, a role in compensating for irreversible Li may be achieved without affecting the desired or suitable battery properties when designing the main active material. For example, if (e.g., when) the content (e.g., amount) of the third particles PTC3 satisfies the above range, capacity and energy density properties may be improved while minimizing or reducing the decrease in lifetime and stability of the positive electrode active material.

The content (e.g., amount) of the third particles PTC3 in the positive electrode active material may be determined in a range where the charge and discharge efficiency of the positive electrode does not fall below the charge and discharge efficiency of the negative electrode. If the charge and discharge efficiency of the positive electrode is higher than the charge and discharge efficiency of the negative electrode, the excess efficiency may not be used and may be wasted. The charge and discharge efficiency refers to the initial discharge amount compared to the initial charge amount. For example, the charge and discharge efficiency of a graphite negative electrode may be about 90% or about 91.5%, and the charge and discharge efficiency of a positive electrode may be about 95%. In this case, the positive electrode active material may further include the third particles PTC3 to the extent that the charge and discharge efficiency of the positive electrode does not fall below about 90% or about 91.5%. By considering the above range, energy density properties may be improved without loss in lifetime characteristics.

The positive electrode active material according to the present disclosure may have high pellet density (PD). In one or more embodiments, a pellet density of the positive electrode active material of the present disclosure may be about 2 g/cc to about 5 g/cc, or about 2.5 g/cc to about 4 g/cc, or about 2.5 g/cc to about 3.0 g/cc. This may be higher than the pellet density of a common LFP. High pellet density may contribute to improving the lifetime characteristics and increasing the energy density of a rechargeable lithium battery. Uniform and dense distribution of the electrode active material may help the consistent maintenance of an electrochemical reaction during charging and discharging processes, which may contribute to improving lifetime characteristics. Because more electrode active material may be stored in a limited space, and more energy may be stored per unit volume, contributing to the increase in energy density.

A rechargeable lithium battery including the positive electrode active material according to one or more embodiments of the present disclosure may have a high average voltage. In one or more embodiments, the average voltage of the rechargeable lithium battery of the present disclosure may be about 3 V to about 4 V. In one or more embodiments, the average voltage range of the present disclosure may be about 3.5 V to about 3.7 V, which may be higher than the average voltage of a common LFP. Because the energy density is proportional to an average voltage, the above-described average voltage may contribute to increasing energy density. In the disclosure, the term "average voltage" may refer to an average voltage of a fully charged rechargeable lithium battery.

The rechargeable lithium battery including the positive electrode active material according to one or more embodiments of the present disclosure may have high energy density. In one or more embodiments, the energy density of the rechargeable lithium battery of the present disclosure may be about 300 Wh/kg to about 600 Wh/kg, about 400 Wh/kg to about 500 Wh/kg, or about 430 Wh/kg to about 480 Wh/kg.

The rechargeable lithium battery including the positive electrode active material according to one or more embodiments of the present disclosure may have high lifetime characteristics. In one or more embodiments, the rechargeable lithium battery of the present disclosure may have capacity retention of about 95% or more after 50 charge and discharge cycles under certain current and voltage conditions. In one or more embodiments, if (e.g., when) initially charging under constant current (about 0.2 C) and constant voltage (about 4.25 V) conditions, initially discharging until about 2.5 V under constant current (about 0.2 C) conditions, and then charging and discharging 50 times at about 0.2 C/0.2 C, the capacity retention may be about 95% to about 100% or about 98% to about 100%, which may be higher than the lifetime characteristics of a common LFP.

Hereinafter, the Examples and Comparative Examples of the disclosure will be described. However, the Examples are only for illustrations of the present disclosure, and the present disclosure is not limited to the Examples.

**Preparation Example 1-1: Preparation of First Particles with Single Particle Form**

A $FePO_4$ iron phosphate precursor, lithium carbonate, and titanium dioxide were mixed in a molar ratio of about 1:1.03:0.004. To the mixture, 10 wt% of glucose, based on the total weight of the $FePO_4$ iron phosphate precursor, lithium carbonate, and titanium dioxide, was added. A wet grinding process was performed by a ball milling with respect to the mixture. The mixture was evaporated and dried in a heating furnace tray, and put in a vacuum oven for drying at about 120 °C for about 4 hours. The dried mixture was then baked under a nitrogen atmosphere at about 750 °C for about 10 hours. The baked product was ground to obtain first particles in a single particle form (e.g., in a form of single particle). The average size of the primary particles of the first particles was about 200 nm to about 300 nm.

**Preparation Example 1-2: Preparation of First Particles with Secondary Particle Form**

A $FePO_4$ iron phosphate precursor, lithium carbonate, and titanium dioxide were mixed in a molar ratio of about 1:1.03:0.004. To the mixture, 10 wt% of glucose, based on the total weight of the $FePO_4$ iron phosphate precursor, lithium carbonate, and titanium dioxide, was added. The mixture as a slurry was evaporated and dried by spray drying with a spray pressure of about 0.5 MPa at temperature conditions of about 230 °C. The dried mixture was then baked under a nitrogen atmosphere at about 750 °C for about 10 hours to obtain first particles in a secondary particle form (e.g., in a form of secondary particle). The average size of the primary particles in the first particles was about 100 nm to about 200 nm.

In other words, Preparation Example 1-1 describes the process of creating first particles in a single particle form. This involves mixing $FePO_4$ iron phosphate precursor, lithium carbonate, and titanium dioxide in a specific molar ratio, adding glucose, and performing wet grinding. The mixture is then dried, baked under a nitrogen atmosphere, and ground to produce primary particles with an average size of 200 nm to 300 nm. Preparation Example 1-2 outlines the method for preparing first particles in a secondary particle form. The same initial materials and molar ratios are used, but the mixture is dried by spray drying at specific conditions before baking. This process results in secondary particles with primary particles averaging 100 nm to 200 nm in size.

**Preparation Example 1-3: Preparation of Second Particles**

In 100 mL of distilled water, 0.170 g of $MnSO_4 \cdot H_2O$ and 0.228 g of $(NH_4)_2S_2O_8$ were dissolved, and sulfuric acid was added thereto to adjust pH to 1, followed by reacting at about 130 °C for about 10 hours to obtain a solid precipitate. The precipitate thus obtained was washed with distilled water several times and dried at about 300 °C for about 3 hours to obtain $MnO_2$ as a solid having an average particle diameter of about 5 $\mu$m.

$Li_2CO_3$ and the $MnO_2$ thus synthesized were mixed so that the molar ratio of Li and Mn became about 1:2, and heated at about 600 °C for about 10 hours to synthesize $LiMn_2O_4$ particles having an average particle diameter of about 7 $\mu$m.

**Preparation Example 1-4: Preparation of Third Particles**

LiO and CoO were mixed in a molar ratio of about 6:1. The mixed powder was sintered under a nitrogen atmosphere at about 600 °C for about 24 hours. Then, the resultant was cooled naturally. The cooled powder was ground using an Air Jet mill at about 6000 rpm to obtain third particles. The chemical formula of the third particles was $Li_6CoO_4$.

**Preparation Example 2-1: Preparation of Main Active Material**

A main active material was prepared by mixing the first particles of Preparation Example 1-1 (single particle form) and the second particles of Preparation Example 1-3 in a weight ratio of about 46:54. In this case, the Mn content (e.g., amount) relative to metal elements excluding lithium in the main active material was about 60 mol%.

**Preparation Example 2-2**

A main active material was prepared by mixing the first particles of Preparation Example 1-1 (single particle form) and the second particles of Preparation Example 1-3 in a weight ratio of about 55:45. In this case, the Mn content (e.g., amount) relative to metal elements excluding lithium in the main active material was about 50 mol%.

**Preparation Example 2-3**

A main active material was prepared by mixing the first particles of Preparation Example 1-2 (secondary particle form) and the second particles of Preparation Example 1-3 in a weight ratio of about 46:54. In this case, the Mn content (e.g., amount) relative to metal elements excluding lithium in the main active material was about 60 mol%.

**Preparation Example 2-4**

A main active material was prepared by mixing the first particles of Preparation Example 1-2 (secondary particle form) and the second particles of Preparation Example 1-3 in a weight ratio of about 55:45. In this case, the Mn content (e.g., amount) relative to metal elements excluding lithium in the main active material was about 50 mol%.

**Comparative Example 1**

A main active material was prepared by mixing the first particles in a secondary particle form of Preparation Example 1-2 and the second particles of Preparation Example 1-3 in a weight ratio of about 59:41. In this case, the Mn content (e.g., amount) relative to metal elements excluding lithium in the main active material was about 45 mol%.

**Comparative Example 2**

A main active material was prepared by mixing the first particles in a secondary particle form of Preparation Example 1-2 and the second particles of Preparation Example 1-3 in a weight ratio of about 32:68. In this case, the Mn content (e.g., amount) relative to metal elements excluding lithium in the main active material was about 75 mol%.

**Example 1: Preparation of Final Positive Electrode Active Material**

A positive electrode active material was prepared by mixing the main active material of Preparation Example 2-2 and the third particles of Preparation Example 1-4 in a weight ratio of about 99.5:0.5. The weight ratio of the first particles (single particles): second particles: third particles was about 54.7:44.8:0.5.

**Example 2**

A positive electrode active material was prepared by mixing the main active material of Preparation Example 2-2 and the third particles of Preparation Example 1-4 in a weight ratio of about 99:1. The weight ratio of the first particles (single particles): second particles: third particles was about 54.5:44.6:1.0.

**Example 3**

A positive electrode active material was prepared by mixing the main active material of Preparation Example 2-4 and the third particles of Preparation Example 1-4 in a weight ratio of about 99.5:0.5. The weight ratio of the first particles (secondary particles): second particles: third particles was about 54.7:44.8:0.5.

**Example 4**

A positive electrode active material was prepared by mixing the main active material of Preparation Example 2-4 and the third particles of Preparation Example 1-4 in a weight ratio of about 99:1. The weight ratio of the first particles (secondary particles): second particles: third particles was about 54.5:44.6:1.0.

## Comparative Example 3

A positive electrode active material was prepared by mixing the main active material of Preparation Example 2-2 and the third particles of Preparation Example 1-4 in a weight ratio of about 98.5:1.5. The weight ratio of the first particles (single particles): second particles: third particles was about 54.2:44.3:1.5.

## Comparative Example 4

A positive electrode active material was prepared by mixing the main active material of Preparation Example 2-4 and the third particles of Preparation Example 1-4 in a weight ratio of about 98.5:1.5. The weight ratio of the first particles (secondary particles): second particles: third particles was about 54.2:44.3:1.5.

## Manufacture of Positive Electrode

95 wt% of the final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied on an aluminum current collector, dried and rolled to manufacture a positive electrode.

## Manufacture of Negative Electrode

A Si-graphite composite, a binder, and a conductive material were mixed in an N-methylpyrrolidone solvent to prepare a negative electrode active material slurry. The negative electrode active material slurry was applied on a copper current collector, dried and rolled to manufacture a negative electrode.

## Fabrication of Rechargeable Lithium Battery

A 2032 type (kind) coin half-cell was formed using the positive electrode prepared and a lithium metal counter electrode as the counter electrode. A separator (thickness: about 16 $\mu$m) composed of a porous polyethylene (PE) film was arranged between the positive electrode and the lithium metal counter electrode, and an electrolyte was injected to fabricate a rechargeable lithium battery. As the electrolyte, an electrolyte solution obtained by mixing 1.3 M $LiPF_6$ with a mixture solvent of ethylene carbonate (EC), ethyl methyl carbonate (EMC), and dimethyl carbonate (DMC) in a volume ratio of about 3:4:3 was used.

## Evaluation Example 1: Analysis on the Surface of Positive Electrode Active Material

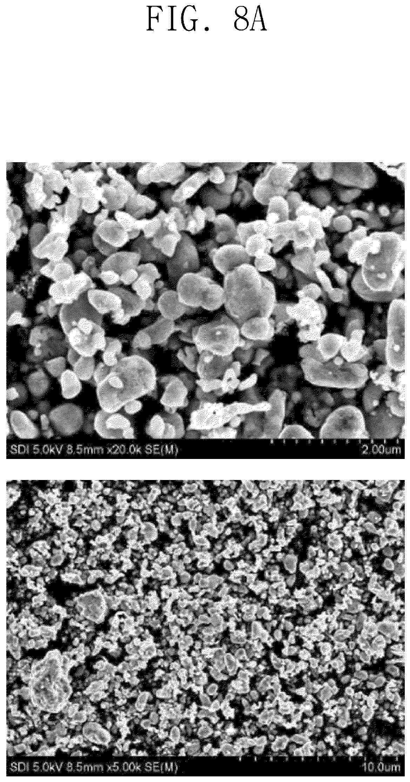

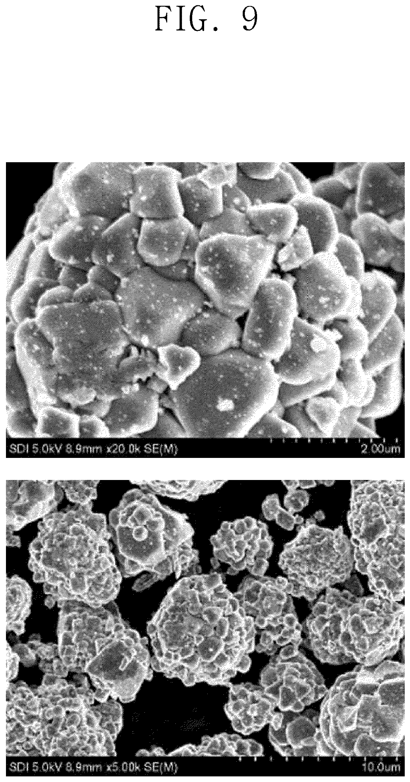

The scanning electron microscope (SEM) images of the first particles (single particle form) prepared in Preparation Examples 1-1 are shown in FIG. 8A. The SEM images of the first particles (secondary particle form) prepared in Preparation Example 1-2 are shown in FIG. 8B. The SEM images of the second particles prepared in Preparation Example 1-3 are shown in FIG. 9. The SEM images of the third particles prepared in Preparation Example 1-4 are shown in FIG. 10.

Referring to FIG. 8A, it can be confirmed that the first particles according to Preparation Example 1-1 of the present disclosure have a fine single particle form with a nano size. Referring to FIG. 8B, it can be confirmed that the first particles according to Preparation Example 1-2 of the present disclosure have a spherical secondary particle form in which primary particles are agglomerated. In addition, it can be confirmed that the primary particles of Preparation Example 1-2 have a smaller size and more substantially uniform compared to the primary particles of Preparation Example 1-1.

Referring to FIG. 9, it can be confirmed that the second particles according to Preparation Example 1-3 of the present disclosure have a secondary particle form in which primary particles are agglomerated.

Referring to FIG. 10, it can be confirmed that the third particles according to Preparation Example 1-4 of the present disclosure have a single particle form.

## Evaluation Example 2: Active Material Evaluation of Main Active Material and Battery Evaluation

The average pellet density (PD) of each of the main active materials of Preparation Examples 2-3 and 2-4, and the properties of each of rechargeable lithium batteries fabricated using the main active materials were evaluated. The average pellet density (PD) of each of the positive electrode active materials of Comparative Examples 1 and 2, and the properties of each of rechargeable lithium batteries fabricated using the positive electrode active materials were evaluated. Because the evaluation was conducted to observe changes in properties depending on the Mn content (e.g., amount) in the main active material, it was conducted without including the third particles PTC3.

Each of rechargeable lithium batteries was initially charged under constant current (about 0.2 C) and constant voltage (about 4.25 V) conditions, and after resting for about 10 minutes, discharged under constant current (about 0.2 C) conditions until about 2.5 V to carry out initial charging and discharging. Then, charging and discharging were repeated 50 times with about 0.2 C/0.2 C. The evaluation results of the battery properties are shown in Table 1. The Mn content (e.g., amount) refers to the content (e.g., amount) of Mn relative to metal elements excluding lithium in the main active material.

Table 1

| | Mixing ratio (weight ratio) | | Mn content (e.g., amount) (mol %) | 0.2 C Charge amount (mAh /g) | 0.2 C Discharge amount (mAh/ g) | 0.2 C Efficiency (%) | Average voltage (V) | **Lifetime (%, 50 cy)** | Energy density (Wh/kg ) | PD (g/cc) |
| | First particles (secondary particles) | Second particles | | | | | | | | |
| Comparative Example 2 | 32 | 68 | 75 | 125.1 | 122.3 | 98.0 | 3.70 | 98.0 | 425 | 2.62 |
| Preparation Example 2-3 | 46 | 54 | 60 | 133.7 | 130.7 | 97.7 | 3.61 | 98.1 | 442 | 2.59 |
| Preparation Example 2-4 | 55 | 45 | 50 | 139.2 | 135.9 | 97.7 | 3.54 | 98.3 | 451 | 2.57 |
| Comparative Example 1 | 59 | 41 | 45 | 141.6 | 138.3 | 97.7 | 3.51 | 97.5 | 454 | 2.55 |

Referring to Table 1, it can be confirmed that the batteries according to Preparation Examples 2-3 and 2-4 each have substantially the same efficiency as the batteries according to Comparative Examples 1 and 2. It can be confirmed that the batteries according to Preparation Examples 2-3 and 2-4 each have higher average voltage and higher pellet density compared to the battery according to Comparative Example 1. It can be confirmed that the batteries according to Preparation Examples 2-3 and 2-4 each have better lifetime characteristics and higher energy density compared to the battery according to Comparative Example 2. For example, it can be confirmed that, if (e.g., when) the Mn content (e.g., amount) relative to metal elements excluding lithium in the main active material is about 50 mol% to about 70 mol%, the decrease of efficiency and average voltage may be minimized or reduced, while achieving excellent or suitable lifetime and excellent or suitable energy density properties.

**Evaluation Example 3: Evaluation of Positive Electrode Active Material**

The average pellet density (PD) of each of the positive electrode active materials of Examples 1 to 4 and Comparative Examples 3 and 4 were measured, and the results are shown in Table 2. The average pellet density was measured by putting 3 g of a positive electrode active material in a pellet mold and applying a force of about 4.0 US tons for about 30 second.

Table 2

| | Mixing weight ratio (%) | | | | PD (g/cc) |
| | First particles | | Second particles | Third particles | |
| | Single particles | Secondary particles | | | |
| Example 1 | 54.7 | 0 | 44.8 | 0.5 | 2.58 |

(continued)

| | Mixing weight ratio (%) | | | | PD (g/cc) |
| --- | --- | --- | --- | --- | --- |
| | First particles | | Second particles | Third particles | |
| | Single particles | Secondary particles | | | |
| Example 2 | 54.5 | 0 | 44.6 | 1.0 | 2.59 |
| Comparative Example 3 | 54.2 | 0 | 44.3 | 1.5 | 2.56 |
| Example 3 | 0 | 54.7 | 44.8 | 0.5 | 2.61 |
| Example 4 | 0 | 54.5 | 44.6 | 1.0 | 2.60 |
| Comparative Example 4 | 0 | 54.2 | 44.3 | 1.5 | 2.59 |

Referring to Table 2, it can be confirmed that the batteries according to Examples 1 and 2 of the present disclosure each have higher average pellet density compared to the battery according to Comparative Example 3. In addition, it can be confirmed that the batteries according to Examples 3 and 4 of the present disclosure each have higher average pellet density compared to the battery according to Comparative Example 4. For example, it can be confirmed that if the content (e.g., amount) of the third particles PTC3 is about 0.5 parts by weight to about 1 part by weight on the basis of about 100 parts by weight of the positive electrode active material, the average pellet density is excellent or suitable.

**Evaluation Example 4: Battery Evaluation II**

The properties of each of the rechargeable lithium batteries fabricated respectively using the positive electrode active materials of Examples 1 to 4 and Comparative Examples 3 and 4 were evaluated, and the results are shown in Table 3. The evaluation conditions were the same as in Evaluation Example 2.

Table 3

| | Mixing ratio (weight ratio) | | | | 0.2 C Charge amount (mAh/g) | 0.2 C Discharge amount (mAh/g) | 0.2 C Efficiency (%) | Average voltage (V) | Lifetime (%, 50 cy) | Energy density (Wh/kg) |
| --- | --- | --- | --- | --- | --- | --- | --- | --- | --- | --- |
| | First particles | | Second particles | Third particles | | | | | | |
| | Single particles | Secondary particles | | | | | | | | |
| Example 1 | 54.7 | 0 | 44.8 | 0.5 | 141.5 | 131.8 | 93.1 | 3.54 | 98.5 | 458 |
| Example 2 | 54.5 | 0 | 44.6 | 1.0 | 144.7 | 130.8 | 90.4 | 3.54 | 98.6 | 463 |
| Comparative Example 3 | 54.2 | 0 | 44.3 | 1.5 | 147.9 | 130.4 | 88.2 | 3.54 | 98.5 | 462 |
| Example 3 | 0 | 54.7 | 44.8 | 0.5 | 143.1 | 135.5 | 94.7 | 3.54 | 98.7 | 464 |
| Example 4 | 0 | 54.5 | 44.6 | 1.0 | 145.9 | 134.8 | 92.4 | 3.54 | 98.9 | 473 |
| Comparative Example 4 | 0 | 54.2 | 44.3 | 1.5 | 149.6 | 134.2 | 89.7 | 3.54 | 98.7 | 475 |

Referring to Table 3, it can be confirmed that the batteries according to Examples 1 and 2 each have the same as or better efficiency and lifetime and substantially the same or better energy density compared to the battery according to Comparative Example 3. In addition, it can be confirmed that the batteries according to Examples 3 and 4 each have the same as or better efficiency and lifetime and substantially the same energy density compared to the battery according to Comparative Example 4. Further, it can be confirmed that the batteries according to Examples 3 and 4 each have higher charge and discharge amounts, efficiency, lifetime and energy density compared to the batteries according to Examples 1 and 2. For example, it can be confirmed that better results were achieved if (e.g., when) the first particles PTC1 contained in the positive electrode active material have a secondary particle form compared to the first particles PTC1 having a single particle form.

The positive electrode active material according to the present disclosure may exhibit improved economic feasibility, structural stability, and lifetime characteristics by including the olivine-based first particles.

The positive electrode active material according to the present disclosure may exhibit improved average voltage by including spinel-based second particles.

The positive electrode active material according to the present disclosure may exhibit improved capacity and energy density by including a small amount of the third particles that function as a sacrificial positive electrode.

The positive electrode active material according to the present disclosure may have improved energy density and lifetime characteristics while securing economic feasibility by mixing the first particles, the second particles, and the third particles in an appropriate or suitable ratio.

As used herein, the term "main active material" refers to constituent active materials that are present in the main active material in a combined amount greater than at least 80 wt% or more of a total amount by weight of an electrode active material including the main active material.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although one or more embodiments of the present disclosure have been described, it is understood that the present disclosure should not be limited to these example embodiments but one or more suitable changes and modifications may be made by one ordinary skilled in the art within the scope of the present disclosure as hereinafter claimed and equivalents thereof.

**Claims**

1. A positive electrode active material, comprising:

   a plurality of first particles each comprising a compound of Chemical Formula 1 and having an olivine structure;
   a plurality of second particles each comprising a compound of Chemical Formula 2 and having a spinel structure; and
   a plurality of third particles each comprising a compound of Chemical Formula 3,
   wherein the first particles and the second particles constitute a main active material, with an amount of about 95 parts by weight to about 99.5 parts by weight on the basis of about 100 parts by weight of the positive electrode active material, and
   the third particles constitute about 0.5 parts by weight to about 5 parts by weight on the basis of about 100 parts by weight of the positive electrode active material,

   Chemical Formula 1 $\quad\quad Li_{a1}Fe_{x1}B^1_{y1}PO_{4-b1}$,

   in Chemical Formula 1, $0.8 \leq a1 \leq 1.2$, $0.95 \leq x1 \leq 1.0$, $0 \leq y1 \leq 0.05$, $0 \leq b1 \leq 0.05$, $x1 + y1 = 1$, and $B^1$ comprises at least one element selected from the group consisting of Al, Ti, V and Mg,

   Chemical Formula 2 $\quad\quad Li_{a2}Mn_{x2}C^1_{y2}O_{4-b2}$,

   in Chemical Formula 2, $0.8 \leq a2 \leq 1.2$, $1.9 \leq x2 \leq 2.05$, $0 \leq y2 \leq 0.05$, $0 \leq b2 \leq 0.05$, and $C^1$ comprises at least one element selected from the group consisting of Al and Mg, and

   Chemical Formula 3 $\quad\quad Li_{a3}CO_{x3}D^1_{y3}O_{4-b3}$,

   in Chemical Formula 3, $5.9 < a3 \leq 6.1$, $0.9 \leq x3 \leq 1.05$, $0 \leq y3 \leq 0.05$, $0 \leq b3 \leq 0.05$, and $D^1$ comprises at least one element selected from the group consisting of Al and Mg.

2. The positive electrode active material as claimed in claim 1, wherein an Mn amount of the main active material is about 50 mol% to about 70 mol% on the basis of a total transition metal of the main active material.

3. The positive electrode active material as claimed in claim 1 or claim 2, wherein a mixing ratio of the first particles to the second particles is about 46:54 to about 37:63 based on a weight.

4. The positive electrode active material as claimed in any one of claims 1 to 3, wherein the amount of the third particles is about 0.5 parts by weight to about 1 part by weight on the basis of about 100 parts by weight of the positive electrode active material.

5. The positive electrode active material as claimed in any one of claims 1 to 4, wherein the third particles are configured to be electrochemically inactive after a first cycle.

6. The positive electrode active material as claimed in any one of claims 1 to 5,

   wherein the first particles have a single particle form,
   the first particle comprises one or more first primary particles,
   a first average particle diameter of the first particles is about 0.5 $\mu$m to about 2.5 $\mu$m, and
   an average size of the first primary particles is about 200 nm to about 300 nm.

7. The positive electrode active material as claimed in any one of claims 1 to 5,

   wherein the first particle comprises a plurality of first primary particles that are agglomerated with each other, and
   the second particle comprises one or more second primary particles.

8. The positive electrode active material as claimed in claim 7,

wherein a first average particle diameter of the first particles is about 3 $\mu$m to about 10 $\mu$m, and an average size of the first primary particles is about 100 nm to about 200 nm.

9. The positive electrode active material as claimed in claim 7 or claim 8, wherein an average size of the first primary particles is smaller than an average size of the second primary particles.

10. The positive electrode active material as claimed in any one of claims 7 to 9, wherein an average size of the second primary particles is about 0.5 $\mu$m to about 3 $\mu$m.

11. The positive electrode active material as claimed in any one of claims 1 to 10,

wherein the first particle comprises a first coating layer containing carbon, and a carbon amount in the first particle is about 1.5 wt% to about 2.5 wt% based on 100 wt% of a total weight of the first particle.

12. The positive electrode active material as claimed in any one of claims 1 to 11, wherein the third particles each have a single particle form.

13. The positive electrode active material as claimed in claim 1, wherein a porosity of the first particles is about 20% to about 40%.

14. The positive electrode active material as claimed in claim 1, wherein a span value of the first particles, measured by a particle size analyzer, is about 0.3 to about 0.75.

15. A rechargeable lithium battery comprising the positive electrode active material as claimed in claim 1.

# FIG. 1

# FIG. 2

# FIG. 3

EP 4 641 676 A1

EP 4 641 676 A1

FIG. 4

25

# FIG. 5

# FIG. 6

# FIG. 7

FIG. 8A

# FIG. 8B

# FIG. 9

# FIG. 10

Europäisches
Patentamt

European
Patent Office

Office européen
des brevets

## EUROPEAN SEARCH REPORT

**Application Number**

EP 25 16 8985

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | QIU CHENGGUANG ET AL: "Electrochemical Performance of LiMn2O4/LiFePO4 Blend Cathodes for Lithium Ion Batteries", CHEMICAL RESEARCH IN CHINESE UNIVERSITIES., vol. 31, no. 2, 20 March 2015 (2015-03-20), pages 270-275, XP093279465, CN ISSN: 1005-9040, DOI: 10.1007/s40242-015-4367-0 * the whole document * | 1-15 | INV.<br>H01M4/36<br>H01M4/505<br>H01M4/58<br>H01M4/62<br>H01M10/0525<br>H01M4/02 |
| Y | US 2023/128140 A1 (YOO TAE GU [KR] ET AL) 27 April 2023 (2023-04-27) * paragraphs [0123], [0093] - [0095] * | 1-15 | |
| A | US 2023/148262 A1 (ROH JONGMIN [KR] ET AL) 11 May 2023 (2023-05-11) * claim 1 * | 1-15 | |
| A | CN 117 280 486 A (LG ENERGY SOLUTION LTD) 22 December 2023 (2023-12-22) * claim 1 * | 1-15 | **TECHNICAL FIELDS SEARCHED (IPC)**<br><br>H01M |
| A | WO 2023/149363 A1 (KANEKA CORP [JP]) 10 August 2023 (2023-08-10) * claim 3 * | 1-15 | |
| A | US 10 541 408 B2 (LG CHEMICAL LTD [KR]) 21 January 2020 (2020-01-21) * claim 1 * | 1-15 | |

-/--

The present search report has been drawn up for all claims

| Place of search | Date of completion of the search | Examiner |
|---|---|---|
| The Hague | 16 June 2025 | Landgraf, Victor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 16 8985

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RENLIANG XU ET AL: "Comparison of sizing small particles using different technologies", POWDER TECHNOLOGY, ELSEVIER, BASEL (CH), vol. 132, no. 2-3, 24 June 2003 (2003-06-24), pages 145-153, XP002711749, ISSN: 0032-5910, DOI: 10.1016/S0032-5910(03)00048-2 * the whole document * | 1-15 | |
| A | LAWRENCE M. ANOVITZ ET AL: "Characterization and Analysis of Porosity and Pore Structures", REVIEWS IN MINERALOGY AND GEOCHEMISTRY, vol. 80, no. 1, 1 January 2015 (2015-01-01), pages 61-164, XP055430422, US ISSN: 1529-6466, DOI: 10.2138/rmg.2015.80.04 * the whole document * | 1-15 | **TECHNICAL FIELDS SEARCHED (IPC)** |

The present search report has been drawn up for all claims

| Place of search | Date of completion of the search | Examiner |
|---|---|---|
| The Hague | 16 June 2025 | Landgraf, Victor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                      

& : member of the same patent family, corresponding document

EPO FORM 1503 03.82 (P04C01)

**EP 4 641 676 A1**

## ANNEX TO THE EUROPEAN SEARCH REPORT
## ON EUROPEAN PATENT APPLICATION NO.

EP 25 16 8985

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2025

| Patent document cited in search report | | Publication date | Patent family member(s) | | Publication date |
|---|---|---|---|---|---|
| US 2023128140 | A1 | 27-04-2023 | CN | 115380400 A | 22-11-2022 |
| | | | EP | 4109588 A1 | 28-12-2022 |
| | | | JP | 7374339 B2 | 06-11-2023 |
| | | | JP | 2023520364 A | 17-05-2023 |
| | | | US | 2023128140 A1 | 27-04-2023 |
| | | | WO | 2022182019 A1 | 01-09-2022 |
| US 2023148262 | A1 | 11-05-2023 | CN | 115119526 A | 27-09-2022 |
| | | | CN | 115119527 A | 27-09-2022 |
| | | | CN | 115119528 A | 27-09-2022 |
| | | | EP | 4084150 A1 | 02-11-2022 |
| | | | EP | 4084151 A1 | 02-11-2022 |
| | | | EP | 4084152 A1 | 02-11-2022 |
| | | | JP | 2024503158 A | 25-01-2024 |
| | | | JP | 2024503159 A | 25-01-2024 |
| | | | JP | 2024503160 A | 25-01-2024 |
| | | | US | 2023094905 A1 | 30-03-2023 |
| | | | US | 2023110207 A1 | 13-04-2023 |
| | | | US | 2023148262 A1 | 11-05-2023 |
| | | | WO | 2022158670 A1 | 28-07-2022 |
| | | | WO | 2022158671 A1 | 28-07-2022 |
| | | | WO | 2022158672 A1 | 28-07-2022 |
| CN 117280486 | A | 22-12-2023 | CN | 117280486 A | 22-12-2023 |
| | | | EP | 4310942 A1 | 24-01-2024 |
| | | | JP | 2024516988 A | 18-04-2024 |
| | | | KR | 20230146881 A | 20-10-2023 |
| | | | US | 2024250259 A1 | 25-07-2024 |
| | | | WO | 2023200082 A1 | 19-10-2023 |
| WO 2023149363 | A1 | 10-08-2023 | CN | 118648136 A | 13-09-2024 |
| | | | JP | WO2023149363 A1 | 10-08-2023 |
| | | | WO | 2023149363 A1 | 10-08-2023 |
| US 10541408 | B2 | 21-01-2020 | CN | 103493257 A | 01-01-2014 |
| | | | EP | 2677569 A1 | 25-12-2013 |
| | | | JP | 5786255 B2 | 30-09-2015 |
| | | | JP | 2014518000 A | 24-07-2014 |
| | | | US | 2013280610 A1 | 24-10-2013 |
| | | | WO | 2013162086 A1 | 31-10-2013 |

EPO FORM P0459

For more details about this annex : see Official Journal of the European Patent Office, No. 12/82

35